# EUROPEAN PATENT APPLICATION

(11) **EP 2 060 417 A1**
(43) Date of publication of application: **20.05.2009**
(21) Application number: 07807681.7
(22) Date of filing: 13.09.2007
(51) Int. Cl.: B60G 17/08, B60G 17/00, F16F 9/26, F16F 15/03

(54) **SUSPENSION DEVICE**

(30) Priority: 11.10.2006 JP 2006277504
(71) Applicant: KAYABA INDUSTRY CO., LTD., Minato-ku Tokyo 105-6111 (JP)
(72) Inventor: OHTA, Yasuhiro, Tokyo 105-6111 (JP); KONDO, Takuhiro, Tokyo 105-6111 (JP)
(74) Representative: Price, Paul Anthony King
(86) International application number: PCT/JP2007/068330
(87) International publication number: WO 2008/044448

(57) **Abstract**

A suspension device S interposed between a sprung member B and an unsprung member W of a vehicle, comprising an actuator A, a hydraulic damper D, and a direction changing mechanism T for changing a linear motion of the actuator A into a linear motion in an opposite direction and transmitting the opposite linear motion to the hydraulic damper D. When a high-frequency vibration acts on the unsprung member, the drawback that the vibration is apt to be transmitted to the sprung member B under the influence of moment of inertia of the actuator A is remedied and it is possible to improve the ride comfort in the vehicle.

## Description

### FIELD OF ART

The present invention relates to an improvement of a suspension device.

### BACKGROUND ART

As a suspension device of this type, there has been proposed a damper comprising a hydraulic damper and an actuator for imparting a propelling force to a piston rod of the hydraulic damper, as is disclosed in Japanese Patent Laid-Open Publication No. 2001-180244. According to this proposal, a rod of the hydraulic damper is formed in a cylindrical shape, an internal thread portion is formed on an inner periphery side of the rod, a shaft connected at one end thereof to a rotor of a motor and at an opposite end thereof to an external thread member which is threadably engaged with the internal thread portion of the rod of the hydraulic damper, and the shaft is inserted through the rod, and thus, the piston rod of the hydraulic damper is constituted by the shaft and the rod (see, for example, Patent Literature 1).

According to the above proposal, force which is produced at the time of making the piston rod extend or retract by relatively moving the shaft and rod axially with use of the motor is added to a damping force developed in the hydraulic damper, that is, the motor torque is converted to force acting in the direction of a relative movement between the shaft and the rod, which force is exerted additionally on the damping force of the hydraulic damper to damp vibration.

Further, a suspension device disclosed in Japanese Patent Laid-Open Publication No. Hei 08 (1996)-197931 is made up of a coil spring which supports a sprung member of a vehicle resiliently, an actuator including a screw shaft threaded rotatably with a ball screw nut connected to an unsprung member and a motor connected to one end of the screw shaft and supported resiliently by a sprung member while being interposed between a pair of springs, and a hydraulic damper fixed to the sprung member to damp a vertical vibration of the motor. A relative movement between a vehicle body and an axle is controlled actively with rotational torque developed by the motor.

### DISCLOSURE OF THE INVENTION

However, the above conventional dampers involve the following problem.

In the suspension devices disclosed in Japanese Patent Laid-Open Publication Nos. 2001-180244 and Hei 08 (1996)-197931, the actuator and the hydraulic damper are directly coupled with each other, so upon input of such a high-frequency vibration as thrusting up from a road surface, a damping force is generated at the same time when the hydraulic damper is compressed.

On the other hand, if the actuator can retract without resistance, the foregoing vibration is not transmitted to the sprung member side, but since the moment of inertia of the rotor of the motor in the actuator is large, the extension or retraction of the actuator cannot follow a high-frequency vibration, resulting in the actuator assuming a rod-like state. In this state, the vibration is apt to be transmitted to the sprung member and hence it is impossible to improve the ride comfort in the vehicle.

The present invention has been accomplished in view of the above-mentioned problem and it is an object of the present invention to provide a suspension device capable of improving the ride comfort in a vehicle while adopting a construction comprising an actuator and a hydraulic damper.

According to the present invention, for achieving the above-mentioned object, there is provided a suspension device interposed between a sprung member and an unsprung member of a vehicle, the suspension device comprising an actuator, a hydraulic damper and a direction changing mechanism for changing a linear motion of the actuator into a linear motion in an opposite direction and transmitting the opposite linear motion to the hydraulic damper.

According to the suspension device of the present invention, when a high-frequency vibration acts on the unsprung member, the drawback that the vibration is apt to be transmitted to the sprung member under the influence of moment of inertia in the actuator is remedied, whereby it is possible to improve the ride comfort in the vehicle.

Also in the event of striking on a projection or passing a depression during a turning motion, it is possible to surely prevent a bottom contact of the hydraulic damper in the suspension device disposed on an outer wheel side on which the vehicle load is increased, whereby the ride comfort in the vehicle can be improved effectively. Besides, since it is possible to prevent the bottom contact of the hydraulic damper located on the outer wheel side on which an impact tends to be large, there is no fear of a functional deterioration of the suspension device and hence the reliability of the suspension device is improved remarkably.

### BRIEF DESCRIPTION OF THE DRAWINGS

Fig. 1 is a diagram showing conceptually a suspension device according to an embodiment of the present invention.
Fig. 2 is a diagram showing a retracting operation of the suspension device of the embodiment.
Fig.3 is a diagram showing an extending operation of the suspension device of the embodiment.
Fig. 4 is a diagram showing another direction changing mechanism.
Fig. 5 is a diagram showing a still another direction changing mechanism.
Fig. 6 is a diagram showing a modification of the still another direction changing mechanism.
Fig. 7 is a diagram showing another modification of the still another direction changing mechanism.
Fig. 8 is a diagram showing a combined construction of both a hydraulic damper and a direction changing mechanism.
Fig. 9 is a diagram showing another combined construction of both a hydraulic damper and a direction changing mechanism.
Fig. 10 is a diagram showing a still another combined construction of both a hydraulic damper and a direction changing mechanism.

### BEST MODE FOR CARRYING OUT THE INVENTION

The present invention will be described below by way of embodiments thereof illustrated in the drawings.

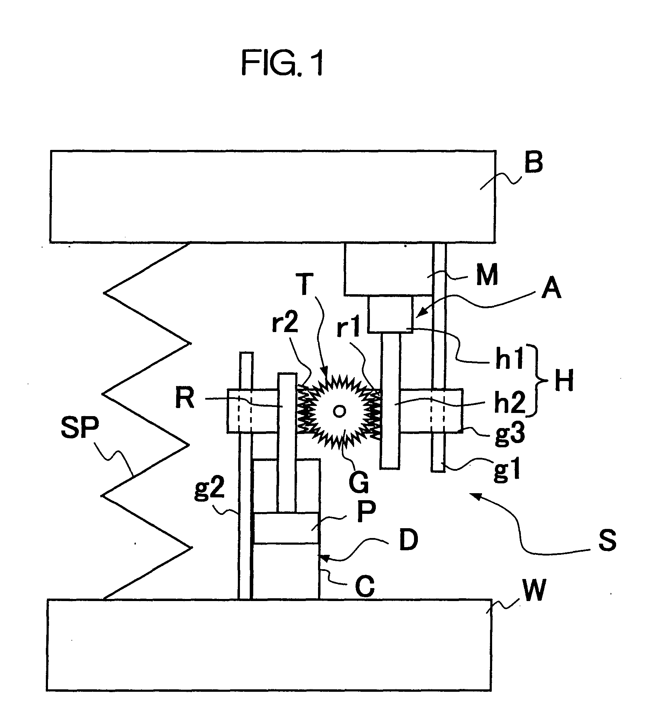

As shown in Fig. 1, a suspension device S according to an embodiment of the present invention includes an actuator A, a hydraulic damper D, and a direction changing mechanism T for changing a linear motion of the actuator A into a linear motion in an opposite direction and transmitting the opposite linear motion to the hydraulic damper D. The suspension device S is interposed between a sprung member B and an unsprung member W in a vehicle.

The actuator A includes a motion transforming mechanism H for transforming a linear motion into a rotational motion and a motor M to which the rotational motion obtained by the motion transforming mechanism H is transmitted. The motion transforming mechanism H includes a rotating member h1 connected directly or indirectly to a rotor (not shown) of the motor M and performing a rotational motion and a linear motion member h2 adapted to perform a linear motion with the rotational motion of the rotating member h1. For example, the motion transforming mechanism is constituted by a feed screw mechanism comprising a screw shaft and a screw nut, or a rack and a pinion, or a worm gear.

The actuator A uses the motor M as a drive source, so in case of adopting the rotating member h1, i.e., the feed screw mechanism, in the motion transforming mechanism H, a rotational motion of a rotating-side member, i.e., either the screw shaft or the screw nut, is transmitted to the motor M. In case of imparting electrical energy to the motor M to drive the motor, the rotating member h1 is rotated and the linear motion member h2 is allowed to perform a linear motion, that is, the function as an actuator can be exhibited.

When the rotational motion is inputted to the motor M forcibly from the rotating member h1, the motor produces torque acting to suppress the rotational motion of the rotating member h1 on the basis of an induced electromotive force, thus functioning to suppress the linear motion of the linear motion member h2. In this case, the motor M regenerates externally-inputted kinetic energy into electric energy and the linear motion of the linear motion member h2 is suppressed with the resulting regenerative torque.

Thus, in the actuator A, thrust can be imparted to the linear motion member h2 by positive generation of torque on the motor M. Further, in the case where the linear motion member h2 is compelled to perform a linear motion with an external force, the linear motion of the linear motion member h2 can be suppressed with the regenerative torque developed by the motor M.

In the suspension device S, not only a relative movement between the sprung member B and the unsprung member W can be suppressed with the thrust of the linear motion member h2 which is induced by the actuator A, but also it is possible to make an attitude control for the sprung member B, more particularly, the vehicle body, by utilizing the function as the actuator. Thus, the function as an active suspension can also be exhibited.

A reduction mechanism, a link mechanism which permits the transfer of a rotational motion, or a joint, may be interposed between the motor M and the rotating member insofar as the motor M and the rotating member h1 in the motion transforming mechanism H are connected together so as to permit the transfer of a rotational motion.

As the motor M, there may be used any of various types insofar as the above-mentioned function can be implemented. For example, there may be used a DC or AC motor, an induction motor, or a synchronous motor.

In the above construction, the actuator A is provided with the motion transforming mechanism H, but in the case where the drive source of the actuator A is a linear motor, the motion transforming mechanism H may be omitted. In this case, the linear motion member may be actuated directly by the linear motor.

As to the hydraulic damper D, although a concrete construction thereof will be described later, it includes a cylinder C, a piston P inserted slidably into the cylinder C and defining therein two pressure chambers to be filled with liquid, and a rod R connected at one end thereof to the piston P. The hydraulic damper D produces a predetermined damping force upon extension or retraction.

In the damper being considered, the hydraulic damper D is interposed between the actuator A and the unsprung member W mainly for the purpose of absorbing a high-frequency vibration. More specifically, one end of the hydraulic damper D is connected to the linear motion member of the actuator A and an opposite end thereof is connected to the unsprung member W. That is, the actuator A is connected to the sprung member B lest vibration should be transmitted to the motor M which is the drive source of the actuator A.

The direction changing mechanism T for transforming the linear motion of the actuator A into a linear motion in the opposite direction and transmitting the opposite linear motion to the hydraulic damper D is disposed between the hydraulic damper D and the actuator A.

As illustrated in the drawing, the direction changing mechanism T includes an actuator-side rack r1 provided on the linear motion member h2 which performs the linear motion of the actuator A, a damper-side rack r2 provided at one end of the hydraulic damper D, and a gear G disposed between the actuator-side rack r1 and the damper-side rack r2 and meshing with both racks. For example, when the linear motion member h2 of the actuator A strokes upwards in Fig. 1, the hydraulic damper D performs an extending motion, while when the linear motion member h2 strokes downwards in Fig. 1, the hydraulic damper D performs a retracting motion.

A rotary shaft of the gear G may be installed so as to permit only movement in the vertical direction with respect to the sprung member B and the unsprung member W and inhibit movement in lateral directions, i.e., in the front and rear direction (the direction piercing through the paper surface) in Fig. 1 and in the right and left direction in Fig. 1. More specifically, guides g1 and g2 which are tubes or rods extending in the vertical direction in Fig. 1 are provided in the actuator A and the hydraulic damper D, respectively, and there is further provided a base portion g3 adapted to slide with respect to those guides and hold the rotary shaft of the gear G. In the illustrated construction, the gear G is constituted by a single gear. However, in the case where the extension or retraction of the actuator A is to be transmitted in a decelerated or accelerated state to the hydraulic damper D, there may be used a gear mechanism comprising an odd number of gears.

Thus, with the direction changing mechanism T, the linear motion of the linear motion member h2 in the actuator A is changed into a linear motion in the opposite direction, which opposite linear motion is transmitted to the hydraulic damper D.

The damper-side rack r2 provided in the hydraulic damper D may be installed on one of the cylinder C and the rod R. Therefore, the other of the cylinder C and the rod R may be connected to the unsprung member W. Thus, the hydraulic damper D may be interposed between the direction changing mechanism T and the unsprung member W either in an erected state or an inverted state.

The suspension device S is further provided with a suspension spring SP interposed between the sprung member B and the unsprung member W. The sprung member B is supported by the suspension spring SP.

That is, in the suspension device S, the hydraulic damper D is connected in series with the actuator A although the direction changing mechanism T is interposed therebetween; besides, the hydraulic damper D is disposed on the unsprung member W side. Therefore, when a high-frequency vibration such as a vibration of a relatively large acceleration is inputted to the unsprung member W while the vehicle is running on a rough road or strikes on a projection on a road surface, the hydraulic damper D absorbs this vibration energy and acts to make the transmission of the vibration to the actuator A side difficult, coupled with the foregoing vibration transfer suppressing effect obtained by biasing means.

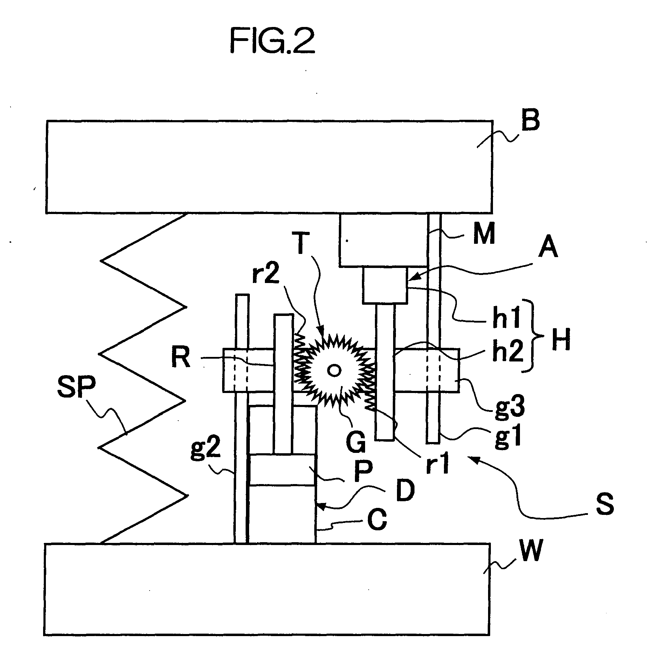

Next, a description will now be given about the operation of the suspension device S constructed as above. When the vehicle gets over a projection on a road surface during travel, as shown in Fig. 2, a thrusting-up vibration is inputted to the suspension device S, whereby the hydraulic damper D retracts so as to absorb the vibration and the whole of the hydraulic damper D moves upwards.

Upon this upward movement of the hydraulic damper D, the actuator A is moved in the opposite, downward direction by the direction changing mechanism T. At this time, the rotor of the motor M and the rotating member h1 in the actuator A are large in the moment of inertia, and even if the extension or retraction of the actuator A is impeded by the moment of inertia, the suspension device S retracts as a whole by virtue of the above operation.

That is, when the vehicle strikes on a projection on a road surface, the high-frequency vibration of the unsprung member W is difficult to be transmitted to the sprung member B since the suspension device S is apt to retract.

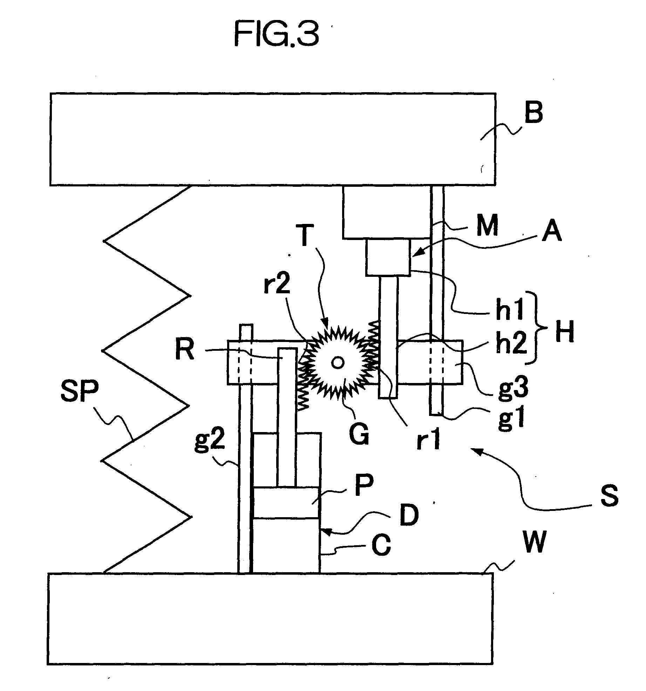

On the other hand, when the vehicle passes a depression formed in a road surface during travel, as shown in Fig. 3, the unsprung member W performs a descending motion and a vibration acting to extend the suspension device S is inputted. In this case, the hydraulic damper D extends so as to absorb the vibration and the whole of the hydraulic damper D moves downwards.

Upon this downward movement of the hydraulic damper D, the actuator A is moved in the opposite, upward direction by the direction changing mechanism T. Now, the actuator A transforms the vibration as a linear motion inputted from the unsprung member W side into a rotational motion. In this connection, the actuator A is provided with many rotating members, the inertial mass thereof is large and so is the moment of inertia against a high-frequency vibration, and the influence of friction exists. Consequently, there is provided a characteristic that the vibration on the unsprung member W side is easy to be transmitted to the sprung member B. Further, the moment of inertia of the rotating member h1 is large, and particularly upon input of a high-frequency vibration, the extension or retraction of the actuator A tends to be impeded by the moment of inertia. However, with the above operation, the suspension device S extends as a whole.

That is, when the vehicle passes a depression formed in a road surface, the high-frequency vibration of the unsprung member W is difficult to be transmitted to the sprung member B since the suspension device S is apt to extend.

Thus, in the suspension device S, when such a high-frequency vibration acts on the unsprung member W, it is possible to remedy the drawback that the vibration is easily transmitted to the sprung member B under the influence of the moment of inertia in the actuator A, and hence possible to improve the ride comfort in the vehicle.

Further, during a turning motion of the vehicle, the vehicle body undergoes rolling and the vehicle load shifts to the outer wheel side rather than the inner wheel side. For suppressing such a condition, force acting in the direction to lift the sprung member B is created in the suspension device S disposed on the outer wheel side so as to offset lateral acceleration of the vehicle body.

When this is implemented, thrust is developed in the direction to extend the actuator A, but the hydraulic damper D is extended by the intervention of the direction changing mechanism T, and the piston P of the hydraulic damper D assumes an upper position in the cylinder C by suppressing the rolling.

When an outer wheel strikes on a projection on a road surface in such a state, the hydraulic damper D displays a retracting motion, but since the piston P of the hydraulic damper D assumes an upper position in the cylinder C, there is a margin of the downward stroke of the piston P and hence the contact of the piston P with a lower end of the cylinder C, i.e., the so-called bottom contact, is prevented.

Conversely, in the case of the suspension device S disposed on an inner wheel side, the bottom contact is apt to occur in contrast with the above operation, but, as mentioned above, the suspension device S is apt to retract and the vehicle load is shifted to the outer wheel side, so that even if the bottom contact should occur, the resulting shock is weaker than in the conventional suspension device. In the conventional suspension device, the bottom contact is apt to occur in the hydraulic damper located on the outer wheel side on which the vehicle load is increased and on which an impact tends to be large. In the suspension device S, however, the bottom contact is sure to be prevented in the hydraulic damper located on the outer wheel side.

Thus, in the suspension device S, even when the vehicle strikes on a projection or passes a depression during a turning motion, not only the ride comfort in the vehicle can be improved, but also it is possible to positively prevent the bottom contact of the hydraulic damper D in the suspension device S disposed on an outer wheel side on which the vehicle load is increased, thus making it possible to improve the ride comfort in the vehicle effectively. Besides, since the bottom contact of the hydraulic damper D on the outer wheel side on which a large shock tends to be induced can be prevented, there is no fear of causing a functional deterioration of the suspension device S, so that the reliability of the suspension device S is improved to a remarkable extent.

Moreover, since a direct exertion of a high-frequency vibration on the actuator A is prevented by the hydraulic damper D as described above, the transfer of particularly a high-frequency vibration of a large acceleration to the motor M is prevented, so that the reliability of the actuator A as a principal component of the suspension device S is improved.

Further, since the above construction permits improvement of the working environment of the actuator A, it also becomes possible to reduce the cost of the actuator A.

Moreover, because of the construction that a linear motion of the actuator A is transmitted to the hydraulic damper D, that is, because of the construction that the motor M and the rotating member h1 are connected to the sprung member B, a large mass such as the mass of the motor M is not included in the mass borne by the suspension spring SP.

Therefore, even if a high-frequency vibration acts on the unsprung member W, the vibration of the unsprung member W is difficult to be transmitted to the sprung member B since the total mass of vibration between the sprung member B and the unsprung member W can be made lighter than in the conventional damper in which the motor M itself is supported by a spring, whereby it becomes possible to further improve the ride comfort.

Further, as will be apparent from the above description, since the motor M itself is not supported by the suspension spring SP, layout of, for example, wiring of the motor M is easy; besides, since a high-frequency vibration is not directly inputted to the motor M itself, there is no fear of damage to the wiring. Accordingly, the damper D is improved in its onboard-ability onto a vehicle and is thus more practicable.

If the position of the piston P in the hydraulic damper D is to be established beforehand with respect to the cylinder C, this can be done by connecting an upper end of the hydraulic damper D, or an upper end of the rod R in Fig. 1, to an intermediate point of the suspension spring SP. By doing so, when no load is imposed on the hydraulic damper D by the suspension spring SP, the piston P is returned to a predetermined position with respect to the cylinder C, whereby the occurrence of a situation such that the piston P stops at an offset position with respect to the cylinder C by extension or retraction of the hydraulic damper D is prevented, thus making it possible to prevent the bottom contact of the hydraulic damper D more positively.

Instead, springs for holding the piston P grippingly may be disposed within each of pressure chambers in the hydraulic damper D. In this case, springs are disposed respectively between the piston P and the upper end of the cylinder C and between the piston P and the lower end of the cylinder C to hold the piston P in a sandwiching manner. Thus, the piston P can be established its position with respect to the cylinder C and there can be obtained the same effect as in case of connecting the upper end of the hydraulic damper D to an intermediate position of the suspension spring SP.

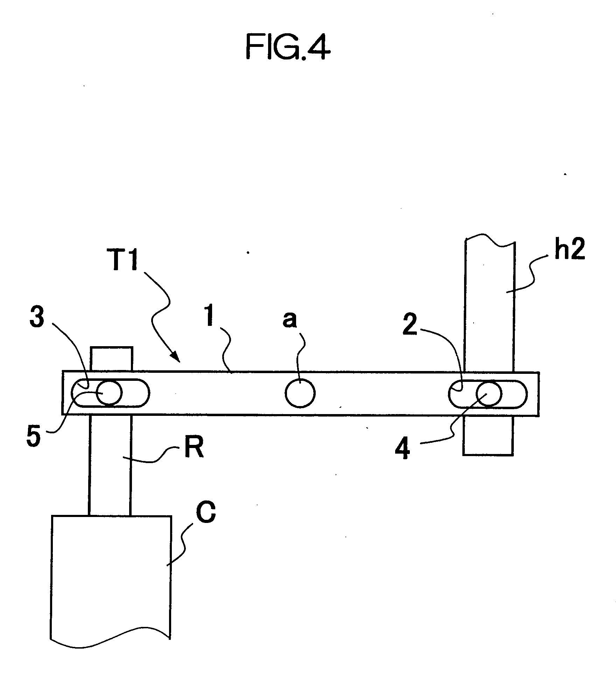

Next, a description will be given about a direction changing mechanism of another construction. As shown in Fig. 4, this direction changing mechanism, indicated at T1, includes a bar 1 which is allowed to rotate about a fulcrum (a). One end of the bar 1 is connected to the linear motion member h2 rotatably while permitting a stroke of the member h2 which performs a linear motion of the actuator A, and an opposite end of the bar 1 is rotatably connected to one end of the hydraulic damper D so as to permit extension and retraction of the hydraulic damper D.

More specifically, the bar 1 is made rotatable about the fulcrum (a) located at a central position, with elongated axial holes 2 and 3 being formed in both ends respectively of the bar 1. A pin 4 is provided on an end portion of the linear motion member h2 so as to be inserted into the elongated hole 2 and a pin 5 is provided on an end portion of the rod R of the hydraulic damper D so as to be inserted into the elongated hole 3. Like the rotary shaft of the gear G in the direction changing mechanism T described above, the fulcrum (a) may be provided so that only the vertical movement is allowed with respect to the sprung member B and the unsprung member W.

Thus, the direction changing mechanism T1 can also function like the direction changing mechanism T described above. That is, even if the direction changing mechanism T1 is adopted, there can be obtained the foregoing function and effect of the suspension device S. In this case, the lever ratio can be changed by appropriately setting the position of the fulcrum (a) on the bar 1.

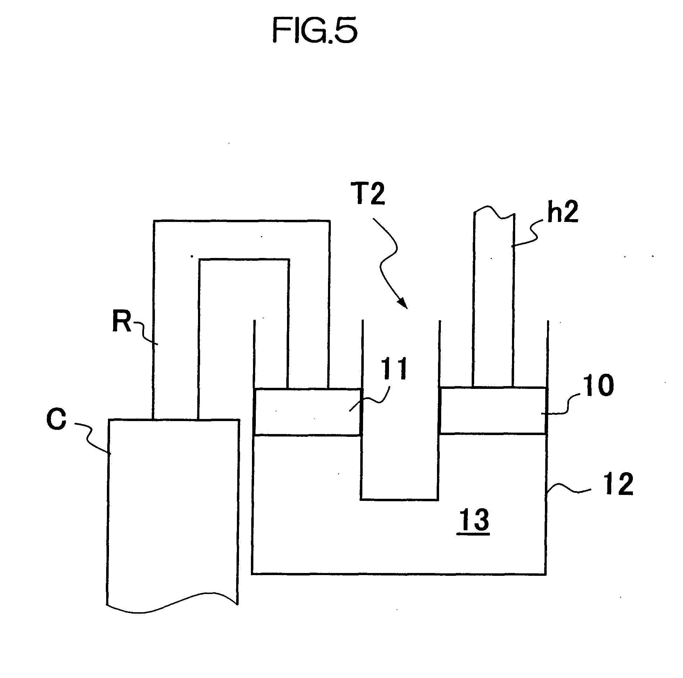

The following description is now provided about a direction changing mechanism of a still another construction. As shown in Fig. 5, this direction changing mechanism, indicated at T2, includes an actuator-side piston 10 connected to the linear motion member h2 of the actuator A, a damper-side piston 11 connected to one end of the rod R of the hydraulic damper D, a changing cylinder 12 into which the actuator-side piston 10 and the damper-side piston 11 are slidably inserted, and a chamber 13 filled with fluid, the chamber 13 being defined by both actuator-side piston 10 and damper-side piston 11 within the changing cylinder 12.

More specifically, the changing cylinder 12 is formed in a cylindrical U shape so that open ends thereof face in the same direction, and the actuator-side piston 10 and the damper-side piston 11 are inserted into the changing cylinder 12 from both open ends respectively of the cylinder to define the chamber 13 within the cylinder.

Therefore, when the actuator-side piston 10 moves downwards in Fig. 5, the other damper-side piston 11 moves upwards in the same figure. Conversely, when the damper-side piston 11 moves downwards in Fig. 5, the other actuator-side piston 10 moves upwards in the same figure. In this way the linear motion of the linear motion member h2 in the actuator A is changed into a linear motion in the opposite direction, which can be transmitted to the hydraulic damper D.

Like the rotary shaft of the gear G in the direction changing mechanism T described above, the changing cylinder 12 may be installed so as to permit only the vertical movement with respect to the sprung member B and the unsprung member W.

Thus, the direction changing mechanism T2 can also function like the direction changing mechanism T described above. That is, even if the direction changing mechanism T2 is adopted, there can be obtained the foregoing function and effect of the suspension device S.

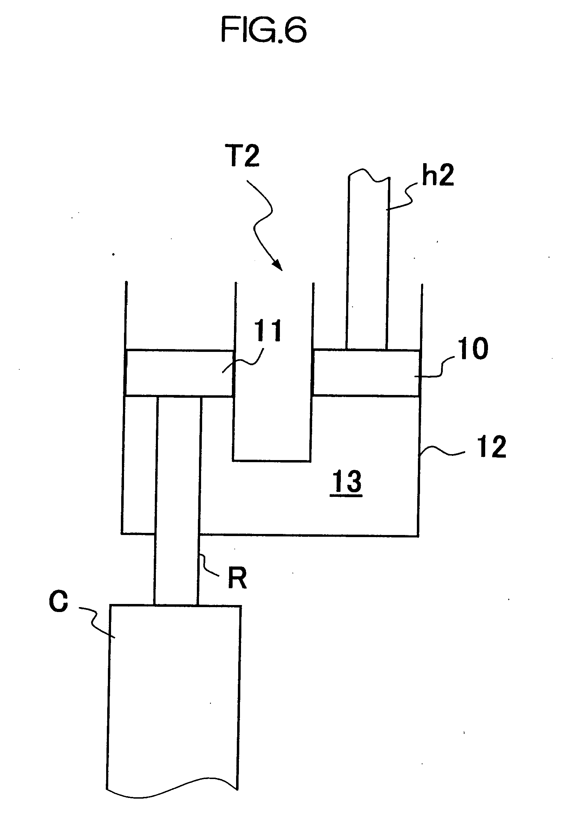

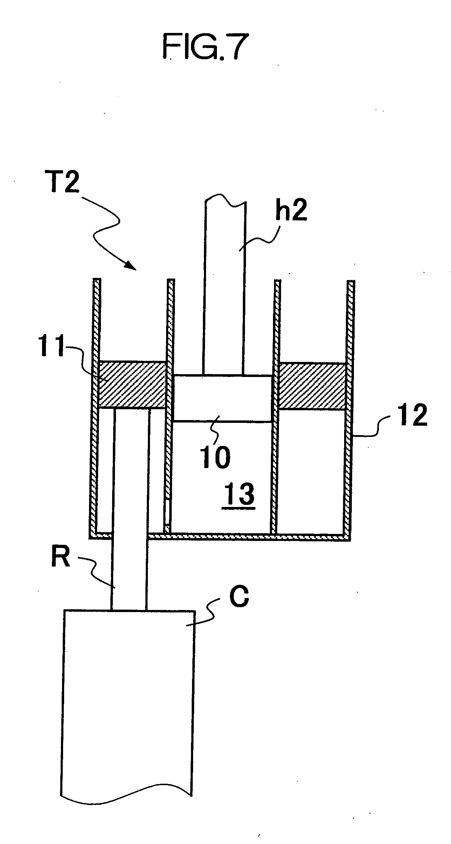

Although the changing cylinder 12 is disposed with its open ends facing upwards in Fig. 5, the top and the bottom may be reversed, that is, the cylinder 12 may be disposed with its open ends facing downwards. Moreover, as shown in Fig. 6, in connecting the damper-side piston 11 with the rod R or the cylinder C in the hydraulic damper D, the rod R or the cylinder C may be connected to the damper-side piston 11 so as to pass through the chamber 13. Further, the changing cylinder 12 may be formed in such a double cylinder shape as shown in Fig. 7.

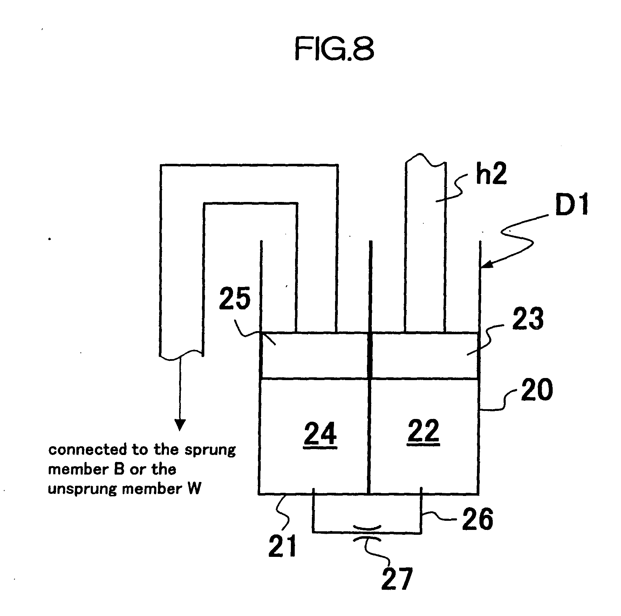

Next, a description will be given about a combined construction of both hydraulic damper and direction changing mechanism. As shown in Fig. 8, a hydraulic damper D1 includes a first cylinder 20, a second cylinder 21 disposed in parallel with the first cylinder 20, an actuator-side piston 23 connected to the linear motion member h2 of the actuator A and inserted slidably into the first cylinder 20 to define a first chamber 22 within the first cylinder 20, a vehicle-side piston 25 connected to the unsprung member W and inserted slidably into the second cylinder 21 to define a second chamber 24 within the second cylinder 21, a passage 26 which provides communication between the first chamber 22 and the second chamber 24 in such a manner that the moving direction of the actuator-side piston 23 and that of the vehicle-side piston 25 are opposite to each other, and a damping force generating element 27 disposed in the passage 26. The first chamber 22 and the second chamber 24 are filled with liquid such as working fluid.

More specifically, the first cylinder 20 and the second cylinder 21 are formed in a cylindrical shape and are connected in parallel with each other. Openings of both the first cylinder 20 and the second cylinder 21 face upward in Fig. 8.

The actuator-side piston 23 is inserted into the first cylinder 20 from the open end of the same cylinder to form the first chamber 22 in a lower portion of the first cylinder 20, while the vehicle-side piston 25 is inserted into the second cylinder 21 from the open end of the same cylinder to form the second chamber 24 in a lower portion of the second cylinder 21. The first chamber 22 and the second chamber 23 are brought into communication with each other through the passage 26. The damping force generating element 27, e.g., a throttle valve, is mounted in the passage 26.

According to this construction, when the actuator-side piston 23 moves downwards in Fig. 8, the vehicle-side piston 25 moves upwards in the same figure. Conversely, when the vehicle-side piston 25 moves downwards in Fig. 8, the actuator-side piston 23 moves upwards in the same figure. In this way, the linear motion of the linear motion member h2 of the actuator A is changed into a linear motion in the opposite direction, which can be transmitted to the hydraulic damper D.

When the operation of the actuator-side piston 23 and that of the vehicle-side piston 25 are performed, liquid interchanges between the first chamber 22 and the second chamber 24 through the passage 26, and when liquid passes through the passage 26, there occurs a pressure loss by the damping force generating element 27, thus creating a damping force to suppress the operation of the actuator-side piston 23 and that of the vehicle-side piston 25.

Since the hydraulic damper D1 is connected to the sprung member B or the unsprung member W, it is not necessary to adopt any special mechanism for supporting the direction changing mechanism.

Thus, the hydraulic damper D1 functions as both a damping force generation source and a direction changing mechanism and hence can function in the same manner as the foregoing hydraulic damper D and direction changing mechanism T. Accordingly, there are obtained the foregoing function and effect of the suspension device S.

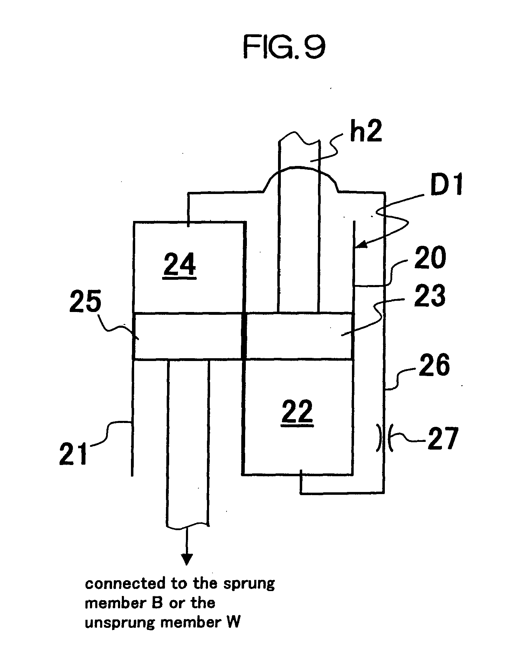

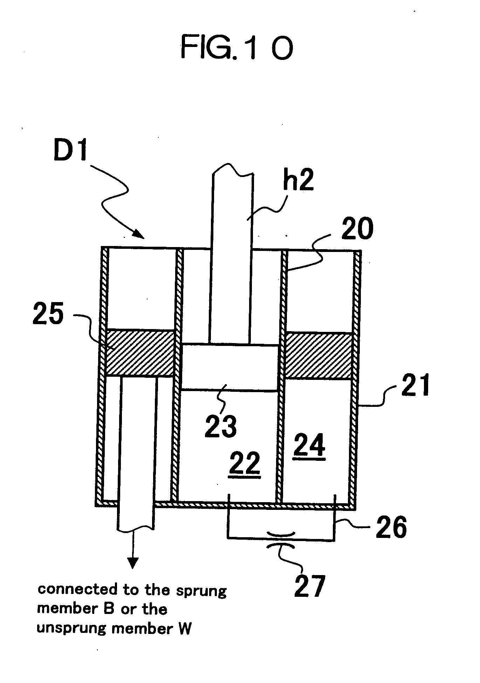

Although the first cylinder 20 and the second cylinder 21 are disposed with their open ends facing upwards in Fig. 8, the top and the bottom may be reversed, that is, both cylinders may be disposed with their open ends facing downwards. There may be adopted such an arrangement as shown in Fig. 9, in which the open ends of the first cylinder 20 and the second cylinder 21 are alternated, and the first chamber 22 is disposed in a lower portion of the first cylinder 20, while the second chamber 24 is disposed in an upper portion of the second cylinder 21, and the first chamber 22 and the second chamber 24 are put in communication with each other through the passage 26. Further, in connecting the vehicle-side piston 25 with the sprung member B or the unsprung member W, a rod-like member extending from the sprung member B or the unsprung member W while passing through the second chamber 24 may be connected to the vehicle-side piston 25. The hydraulic damper D1 may be formed in a double cylinder shape as shown in Fig. 10.

The present invention have been described above by way of embodiments thereof, but it goes without saying that the scope of the present invention is not limited to the details itself illustrated in the drawings or described above.

### INDUSTRIAL APPLICABILITY

The suspension device of the present invention is applicable to a vehicular suspension.

## Claims

1. A suspension device interposed between a sprung member and an unsprung member of a vehicle, comprising:
an actuator;
a hydraulic damper; and
a direction changing mechanism for changing a linear motion of the actuator into a linear motion in an opposite direction and transmitting the opposite linear motion to the hydraulic damper.

2. The suspension device according to claim 1, wherein the actuator comprises a motion transforming mechanism for transforming a linear motion into a rotational motion, and a motor to which the rotational motion obtained by the motion transforming mechanism is transmitted.

3. The suspension device according to claim 1 or claim 2, wherein the hydraulic damper comprises a cylinder, a piston inserted into the cylinder slidably and defining two pressure chambers within the cylinder, and a rod connected at one end thereof to the piston, either the rod or the cylinder being connected to the direction changing mechanism and the linear motion of the actuator being transmitted thereto.

4. The suspension device according to any of claims 1 to 3, wherein the direction changing mechanism comprises an actuator-side rack provided on a linear motion member which performs the linear motion of the actuator, a damper-side rack provided at one end of the hydraulic damper, and a gear interposed between the actuator-side rack and the damper-side rack and meshing with both said racks.

5. The suspension device according to any of claims 1 to 3, wherein the direction changing mechanism comprises a bar which is allowed to rotate about a fulcrum, one end of the bar being connected to a linear motion member rotatably while permitting a stroke of the linear motion member which performs the linear motion of the actuator, and an opposite end of the bar being connected to one end of the hydraulic damper rotatably while permitting extension and retraction of the hydraulic damper.

6. The suspension device according to any of claims 1 to 3, wherein the direction changing mechanism comprises an actuator-side piston connected to a linear motion member of the actuator, a damper-side piston connected to one end of the hydraulic damper, a changing cylinder into which the actuator-side piston and the damper-side piston are inserted slidably, and a chamber defined within the changing cylinder by the actuator-side piston and the damper-side piston and filled with fluid.

7. The suspension device according to claim 1 or claim 2, wherein the hydraulic damper comprises a first cylinder, a second cylinder disposed in parallel with the first cylinder, an actuator-side piston connected to a linear motion member of the actuator and inserted slidably into the first cylinder to define a first chamber within the first cylinder, a vehicle-side piston connected to the sprung member or the unsprung member and inserted slidably into the second cylinder to define a second chamber within the second cylinder, a passage which provides communication between the first chamber and the second chamber in such a manner that a moving direction of the actuator-side piston and that of the vehicle-side piston are opposite to each other, and a damping force generating element disposed in the passage, and the hydraulic damper functions as a direction changing mechanism.

8. The suspension device according to any of claims 1 to 7, further comprising a suspension spring interposed between the sprung member and the unsprung member, and wherein an upper end of the hydraulic damper is connected to an intermediate portion of the suspension spring.

9. The hydraulic damper described in any of claims 3 to 7, wherein springs for holding the piston grippingly from both end sides are accommodated within pressure chambers of the hydraulic damper.
